# EUROPEAN PATENT APPLICATION

(11) **EP 3 584 700 A1**
(43) Date of publication of application: **25.12.2019**
(21) Application number: 17901172.1
(22) Date of filing: 25.09.2017
(51) Int. Cl.: G06F 9/48, G06F 9/54

(54) **FINGERPRINT RECOGNITION METHOD AND RELATED PRODUCT**

(30) Priority: 16.03.2017 CN 201710157560
(71) Applicant: GUANGDONG OPPO MOBILE TELECOMMUNICATIONS CORP., LTD., Wusha, Chang'an Dongguan, Guangdong 523860 (CN)
(72) Inventor: WANG, Jian, Dongguan, Guangdong 523860 (CN)
(74) Representative: Manitz Finsterwald Patent- und Rechtsanwaltspartnerschaft mbB
(86) International application number: PCT/CN2017/103226
(87) International publication number: WO 2018/166169

(57) **Abstract**

Implementations of the present disclosure provide a method for fingerprint recognition and related products. The method is applied to a mobile terminal having an Android operating system. The mobile terminal includes a fingerprint application (FingerprintService) and a fingerprint communication process (fingerprintd). The method includes the following. The FingerprintService detects whether a lag appears during calling a process (binder) via the fingerprintd. In response to that the lag appears during calling the binder via the fingerprintd, the FingerprintService restarts the fingerprintd with a first PID, where the first PID is stored in a local memory in advance. The fingerprintd obtains a second PID and transmits the second PID to the FingerprintService, where the second PID is obtained during restarting the fingerprintd with the first PID. In the implementations of the present disclosure, time taken for that fingerprint takes effect can be reduced.

## Description

### CROSS-REFERENCE TO RELATED APPLICATION(S)

This disclosure claims priority to Chinese Patent Application Serial No. 201710157560.1, filed on March 16, 2017, entitled "METHOD FOR FINGERPRINT RECOGNITION AND MOBILE TERMINAL", the entire disclosures of which are hereby incorporated by reference.

### TECHNICAL FIELD

This disclosure relates to the field of electronic devices, and particularly to a method for fingerprint recognition and related products.

### BACKGROUND

With the rapid development of information technology, mobile terminals such as mobile phones, tablet computers and the like become increasingly popular. The fingerprint recognition technology as a standard configuration of the mobile terminals are widely used in the mobile terminals.

### SUMMARY

Implementations of the present disclosure provide a method for fingerprint recognition and related products, which can reduce time taken for that fingerprint takes effect.

According to a first aspect of the implementations of the present disclosure, a method for fingerprint recognition is provided. The method is applied to a mobile terminal having an Android operating system. The mobile terminal includes a fingerprint application (FingerprintService) and a fingerprint communication process (fingerprintd). The method includes the following. Whether a lag appears during calling a process (binder) via the fingerprintd is detected via the FingerprintService. In response to that the lag appears during calling the binder via the fingerprintd, the fingerprintd is restarted with a first process identifier (PID) via the FingerprintService, where the first PID is stored in a local memory in advance. A second PID is obtained and transmitted to the FingerprintService via the fingerprintd, where the second PID is obtained during restarting the fingerprintd with the first PID.

According to a second aspect of the implementations of the present disclosure, a device for fingerprint recognition is provided. The device is applied to a mobile terminal having an Android operating system. The mobile terminal includes a fingerprint application (FingerprintService) and a fingerprint communication process (fingerprintd). The FingerprintService is configured to detect whether a lag appears during calling a process (binder) via the fingerprintd. The FingerprintService is further configured to restart, in response to that the lag appears during calling the binder via the fingerprintd, the fingerprintd with a first PID, where the first PID is stored in a local memory in advance. The fingerprintd is configured to obtain a second PID and transmit the second PID to the FingerprintService, where the second PID is obtained during restarting the fingerprintd with the first PID.

According to a third aspect of the implementations of the present disclosure, a mobile terminal is provided. The mobile terminal includes a processor, a memory, and one or more programs. The one or more programs are stored in the memory, and configured to be executed by the processor. The one or more programs include instructions operable to execute part of or all the operations described in the first aspect of the implementations of the present disclosure.

According to a fourth aspect of the implementations of the present disclosure, a computer readable storage medium is provided. The computer readable storage medium is configured to store computer programs. The computer programs are operable with a computer to perform all or part of the operations described in the first aspect of the implementations of the present disclosure.

According to a fifth aspect of the implementations of the present disclosure, a computer program product is provided. The computer program product includes a non-transitory computer readable storage medium that stores computer programs. The computer programs are operable with a computer to perform all or part of the operations described in the first aspect of the implementations of the present disclosure. The computer program product is a software installation package.

### BRIEF DESCRIPTION OF THE DRAWINGS

To describe technical solutions of implementations of the present disclosure more clearly, the following will give a brief description of accompanying drawings used for describing the implementations of the present disclosure. Apparently, the accompanying drawings described in the following are merely some implementations of the present disclosure. Those of ordinary skill in the art can also obtain other accompanying drawings based on the accompanying drawings without creative efforts.
FIG. 1 is a schematic flow chart illustrating underlying fingerprint unlocking application according to an implementation of the present disclosure.
FIG. 2 is a schematic flow chart illustrating PID transmission after restarting fingerprintd according to an implementation of the present disclosure.
FIG. 3 is a schematic flow chart illustrating a method for fingerprint recognition according to a first implementation of the present disclosure.
FIG. 4 is a schematic flow chart illustrating a method for fingerprint recognition according to a second implementation of the present disclosure.
FIG. 5 is a schematic structural diagram illustrating a device for fingerprint recognition according to an implementation of the present disclosure.
FIG. 6 is a schematic structural diagram illustrating a mobile terminal according to an implementation of the present disclosure.
FIG. 7 is a schematic structural diagram illustrating a mobile phone according to an embodiment of the present disclosure.

### DETAILED DESCRIPTION

Generally, fingerprint unlocking refers to a process from touch of a fingerprint recognition module to completion of fingerprint recognition, and mainly includes three phases: fingerprint collection, image match, and interactive interface display. Time for fingerprint unlocking refers to time consumed by the three phases, that is, total time taken for successful unlocking. The time consumed by the phases refers to time consumed by a fingerprint recognition phase after fingerprint takes effect. In actual use, there is a time interval from a time point of touch of the fingerprint recognition module to a time point at which fingerprint takes effect. When the fingerprint recognition module is touched, fingerprint does not take effect, and thus after fingerprint takes effect, a user is prompted for pressing the fingerprint recognition module once more. A fingerprint recognition efficiency is reduced due to time taken for pressing the fingerprint recognition module once more. Therefore, how to improve efficiency of that fingerprint takes effect is a problem needed to be solved instantly. Implementations of the present disclosure provides a method for fingerprint recognition and related products, which can reduce time consumed by that fingerprint takes effect.

The technical solutions embodied in implementations of the present disclosure will be described in a clear and comprehensive manner in conjunction with the accompanying drawings used for describing the implementations of the present disclosure.. It is apparent that the implementations described herein are merely some of rather than all the implementations of the present disclosure. Based on the implementations of the present disclosure, all other implementations obtained by those of ordinary skill in the art without creative efforts shall fall within the protection scope of the present disclosure.

The terms "first", "second", "third", "fourth", and the like used in the specification, the claims, and the accompany drawings of the present disclosure are used to distinguish different objects rather than describe a particular order. In addition, the terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The term "embodiment" or "implementation" referred to herein means that a particular feature, structure, or characteristics described in conjunction with the implementations may be contained in at least one implementation of the present disclosure. The phrase appearing in various places in the specification does not necessarily refer to the same implementation, nor does it refer to an independent or alternative implementation that is mutually exclusive with other implementations. It is expressly and implicitly understood by those skilled in the art that an implementation described herein may be combined with other implementations.

Mobile terminals involved in the implementations of the present disclosure may include smart phones such as Android" mobile phones, iOS® mobile phones, Windows phones and the like, tablet computers, palm computers, laptop computers, mobile internet devices (MIDs), wearable devices, or the like. The above-mentioned terminals are merely illustrative and not exhaustive, including but not limited to the above-described mobile terminals.

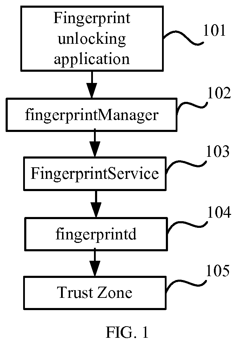

As illustrated in FIG. 1, what needs to be illustrated is that for making fingerprint take effect, a fingerprint unlocking application 101 needs to apply for usage of a fingerprint recognition module. The software applying process starts from activation of the fingerprint unlocking application 101, and then proceeds to a fingerprintManager 102, FingerprintService 103, and fingerprintd 104 sequentially, and finally proceeds to a trust zone (TZ) 105, and then a fingerprint usage right is obtained. If right fingerprint is received by the fingerprint recognition module, a mobile terminal is directly unlocked. If wrong fingerprint is received by the fingerprint module, a user is prompted for that "wrong fingerprint and lift your finger to try again". In actual application, a problem may occur, that is, why an interaction that "the user needs to lift his/her finger for execution of next detection" is needed when there is wrong fingerprint. Since next recognition is automatically performed when it is recognized that there is wrong fingerprint, if the user does not lift his/her finger at this point, the same image is collected, and thus the same wrong fingerprint is received. This process repeats until the number of times wrong fingerprint is recognized reaches the maximum times. Thus, by outputting the request for prompting the user to lift his/her finger, the user may have time to think which finger is right, or another position containing fingerprint can be selected for a try.

In principle, in terms of "requesting the user to lift his/her finger", whether a finger is placed on the fingerprint recognition module is first detected before performing fingerprint recognition. If one finger is placed on the fingerprint recognition module, the user is requested to lift his/her finger. In such case that it is the first time for the user to use fingerprint recognition and the finger is placed on the fingerprint recognition module before fingerprint takes effect, there was no recognition result of wrong fingerprint before, and if the user is stilled prompted for that "lift your finger and try again" in such case, experience of using fingerprint recognition for the first time may be poor. Thus, a speed at which fingerprint takes effect is a key point for improving user experience.

From the perspective of user experience, the time taken for that fingerprint takes effect may be a time interval from a time point at which the user touches the fingerprint recognition module to a time point at which the user lift his/her finger. If the two actions are speeded up to a human body extreme limit, fingerprint still takes effect, then good user experience can be provided. After the two actions are speeded up, if the user is requested to lift his/her finger and place his/her finger once more, then poor user experience may be provided.

The time taken for that fingerprint takes effect includes the following. (1) A time interval from a time point at which the fingerprint recognition module is touched to a time point at which the fingerprint unlocking application applies to the system for fingerprint usage. (2) A time interval from a time point at which the system receives the request from the fingerprint unlocking application to a time point at which the fingerprint usage is confirmed.

The time taken for that fingerprint takes effect includes the time taken for the above two phases. The solution of the second phase is a system solution, and is suitable for all applications using fingerprint. The solution of the first phase is an application solution, and is only suitable for a single application.

Actually, the solution of the first phase is suitable for applications (except lock screen) for which a time-consuming operation is not performed during an interaction applying for fingerprint usage. The lock screen is a special application. For the lock screen, the time taken for that fingerprint takes effect is not only related to codes of the application, but also related to activity manager service (AMS), power manager service (PMS), and other system modules.

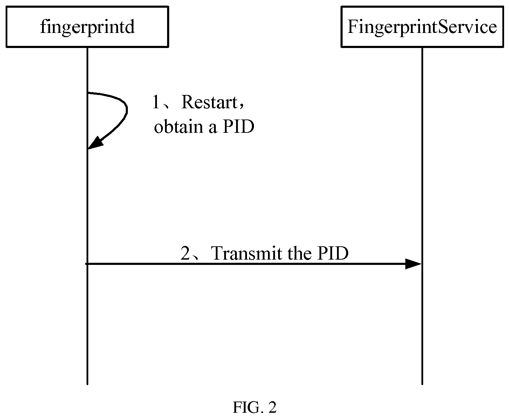

What needs to be illustrated is that the fingerprintd serves as a single thread, and at the same only one process (binder) can be called (i.e., a mechanism for communication between system processes). Thus, when a lag appears during one calling executed via the fingerprintd, a lag may appears in fingerprint reception. According to the implementations of the present disclosure, to increase fingerprint stability, a solution is provided as follows.
1. The fingerprintd has property setting for querying current status of an interface. The property setting needs a share memory of a read-write system, and efficiency of property setting is low. Writing a property probably takes 8ms. The property setting may include a flag for indicating whether to start to call an interface, a flag for indicating completion of interface calling, and so on. For example, the status of an interface may include the current interface being currently called and running of the current interface being completed. The duration of execution of the current interface can be monitored to determine whether a lag appears during calling the binder.
2. The FingerprintService monitors whether the lag appears during calling the binder. Whether the lag appears during calling the binder can be monitored. When there is a lag, the fingerprintd is restarted with a PID of the fingerprintd. Thus, the current ID of the fingerprintd needs to be obtained for each calling. Since it may take a lot of time such as 80ms for the FingerprintService to query a PID of another process, the time taken for that fingerprint takes effect can be reduced by restarting the fingerprintd. As illustrated in FIG. 2, the following are included. 1. The fingerprintd is restarted to obtain a new PID. 2. The new PID is transmitted to the FingerprintService.

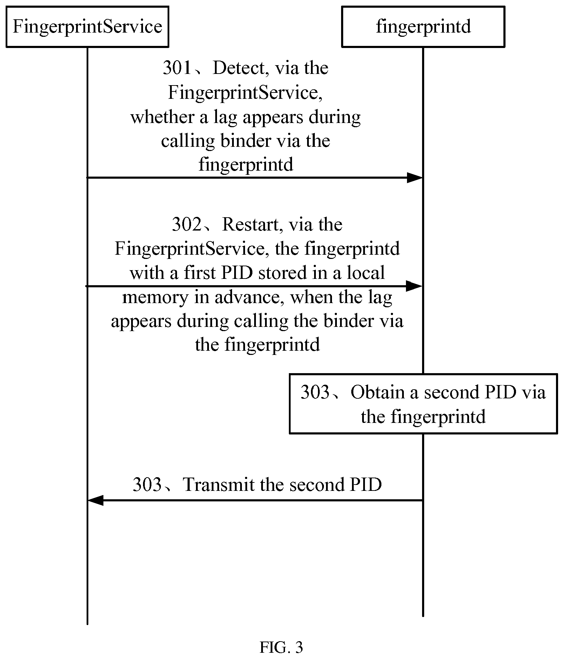

FIG. 3 is a schematic flow chart illustrating a method for fingerprint recognition according to a first implementation of the present disclosure. The method for fingerprint recognition illustrated in the implementation includes the following

At block 301, FingerprintService detects whether a lag appears during calling binder by fingerprintd.

In actual application, when there is a lag during calling a certain process, a cycle operation may be involved, that is, a certain piece of codes are executed many times. Thus, by means of this manner, whether the lag appears during calling the binder via the fingerprintd can be determined. If the lag appears during calling the binder via the fingerprintd, the fingerprintd needs to be restarted.

For example, at block 301, the FingerprintService detects whether the lag appears during calling the binder via the fingerprintd as follows. The FingerprintService detects whether the fingerprintd succeeds in calling the binder within a preset period. If the fingerprintd does not successfully call the binder within the preset period, it is determined that the lag appears during calling the binder via the fingerprintd.

The preset period may be set by a user or system default. Generally, determining whether the fingerprintd succeeds in calling the binder refers to monitoring a process of executing corresponding codes. Execution of every line of codes takes a certain time. Thus, the duration of code execution for calling the binder via the fingerprintd can be taken as the preset period. Thus, only when the duration of calling the binder via the fingerprintd exceeds the preset period, it can be determined that the fingerprintd fails to call the binder. It the duration of calling the binder via the fingerprintd is shorter than the preset period, it can be determined that the fingerprintd succeeds in calling the binder.

At block 302, when the lag appears during calling the binder via the fingerprintd, the FingerprintService restarts the fingerprintd with a first PID stored in a local memory in advance.

The first PID can be stored in the local memory. Thus, when the lag appears during calling the binder via the fingerprintd, the FingerprintService restarts the fingerprintd with the first PID.

For example, at block 302, the FingerprintService restarts the fingerprintd with the first PID stored in the local memory in advance as follows. The FingerprintService ends the fingerprintd with a kill command, and restarts the fingerprintd with the first PID.

The FingerprintService can execute the kill command to kill the fingerprintd, and then restarts the fingerprintd with the first PID.

At block 303, the fingerprintd obtains a second PID and transmits the second PID to the FingerprintService, where the second PID is obtained during restarting the fingerprintd with the first PID.

After restarting the fingerprintd, a new PID, i.e., the second PID, can be obtained. The second PID is transmitted to the FingerprintService. The second PID is obtained during restarting the fingerprintd with the first PID.

For example, after the fingerprintd obtains the second PID and transmits the second PID to the FingerprintService at block 303, the method further includes the following. The FingerprintService updates the first PID with the second PID. The FingerprintService can replace the first PID with the second PID.

It can be seen that by means of the implementation of the present disclosure, the FingerprintService detects whether the lag appears during calling the binder via the fingerprintd. When the lag appears during calling the binder via the fingerprintd, the FingerprintService restarts the fingerprintd with the first PID stored in the local memory in advance. The fingerprintd obtains the second PID and transmits the second PID to the FingerprintService. The second PID is obtained during restarting the fingerprintd with the first PID. Thus, when the lag appears during calling the binder via the fingerprintd, there is no need to obtain another PID from another interface, and can obtain another PID by restarting the fingerprintd. Time consumed by restarting the fingerprintd to obtain another PID is shorter than that consumed by obtaining another PID from another interface. Thus, time taken for that fingerprint takes effect can be reduced. A subsequent fingerprint unlocking process can be performed. In the implementation of the present disclosure, after a fingerprint recognition module is pressed, if fingerprint recognition fails, during lifting the finger, a fingerprint image can be collected once more. The fingerprint image can be recognized. If fingerprint recognition succeeds, fingerprint unlocking is performed directly. Thus, there is no need to wait for another press on the fingerprint recognition module.

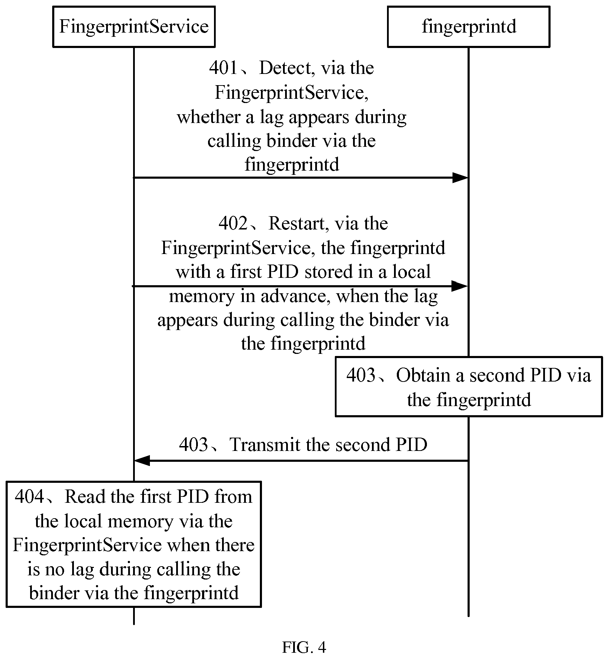

In consistence with the above, FIG. 4 is a schematic flow chart illustrating a method for fingerprint recognition according to a second implementation of the present disclosure. The method for fingerprint recognition illustrated in the implementation includes the following.

At block 401, FingerprintService detects whether a lag appears during calling binder by fingerprintd.

At block 402, when the lag appears during calling the binder via the fingerprintd, the FingerprintService restarts the fingerprintd with a first PID stored in a local memory in advance.

At block 403, the fingerprintd obtains a second PID and transmits the second PID to the FingerprintService, where the second PID is obtained during restarting the fingerprintd with the first PID.

For detailed description of the operations at blocks 401 to 403, reference can be made to the corresponding operations of the method for fingerprint recognition illustrated in FIG. 3.

At block 404, when there is no lag during calling the binder via the fingerprintd, the FingerprintService reads the first PID from the local memory.

When there is no lag during calling the binder via the fingerprintd, the FingerprintService can directly obtain the first PID from the local memory.

It can be seen that by means of the implementation of the present disclosure, the FingerprintService detects whether the lag appears during calling the binder via the fingerprintd. When the lag appears during calling the binder via the fingerprintd, the FingerprintService restarts the fingerprintd with the first PID stored in the local memory in advance. The fingerprintd obtains the second PID and transmits the second PID to the FingerprintService. The second PID is obtained during restarting the fingerprintd with the first PID. Thus, when the lag appears during calling the binder via the fingerprintd, there is no need to obtain another PID from another interface, and can obtain another PID by restarting the fingerprintd. Time consumed by restarting the fingerprintd to obtain another PID is shorter than that consumed by obtaining another PID from another interface. Thus, time taken for that fingerprint takes effect can be reduced. A subsequent fingerprint unlocking process can be performed. In the implementation of the present disclosure, after a fingerprint recognition module is pressed, if fingerprint recognition fails, during lifting the finger, a fingerprint image can be collected once more. The fingerprint image can be recognized. If fingerprint recognition succeeds, fingerprint unlocking is performed directly. Thus, there is no need to wait for another press on the fingerprint recognition module.

In consistence with the above, a device for implementing the methods for fingerprint recognition mentioned above is illustrated in the following.

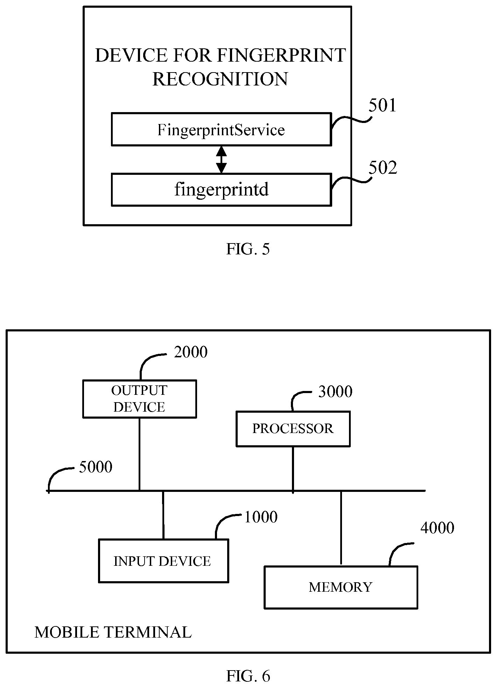

FIG. 5 is a schematic structural diagram illustrating a device for fingerprint recognition according to an implementation of the present disclosure. The device for fingerprint recognition illustrated in the implementation is applied to a mobile terminal 502 including FingerprintService 501 and fingerprintd 502.

The FingerprintService 501 is configured to detect whether a lag appears during calling a binder via the fingerprintd 502, and restart, in response to that the lag appears during calling the binder via the fingerprintd 502, the fingerprintd 502 with a first PID, where the first PID is stored in a local memory in advance.

The fingerprintd 502 is configured to obtain a second PID and transmit the second PID to the FingerprintService 501, where the second PID is obtained during restarting the fingerprintd 502 with the first PID.

For example, the FingerprintService 501 configured to detect whether the lag appears during calling the binder via the fingerprintd 502 is configured to detect whether the fingerprintd 502 succeeds in calling the binder within a preset period, and determine, in response to that the fingerprintd 502 fails to call the binder within the preset period, that the lag appears during calling the binder via the fingerprintd 502.

For example, the preset period is set by a user or system default.

For example, the preset period is duration of code execution for calling the binder via the fingerprintd 502.

For example, the FingerprintService 501 configured to restart the fingerprintd 502 with the first PID stored in the local memory in advance is configured to end the fingerprintd 502 with a kill command, and restart the fingerprintd 502 with the first PID.

For example, the FingerprintService 502 is further configured to read, in response to that there is no lag during calling the binder via the fingerprintd 501, the first PID from the local memory.

The FingerprintService 501 is further configured to update the first PID with the second PID after the fingerprintd 502 obtains the second PID and transmits the second PID to the FingerprintService 501.

It can be seen that by means of the device for fingerprint recognition according to the implementation of the present disclosure, the FingerprintService detects whether the lag appears during calling the binder via the fingerprintd. When the lag appears during calling the binder via the fingerprintd, the FingerprintService restarts the fingerprintd with the first PID stored in the local memory in advance. The fingerprintd obtains the second PID and transmits the second PID to the FingerprintService. The second PID is obtained during restarting the fingerprintd with the first PID. Thus, when the lag appears during calling the binder via the fingerprintd, there is no need to obtain another PID from another interface, and can obtain another PID by restarting the fingerprintd. Time consumed by restarting the fingerprintd to obtain another PID is shorter than that consumed by obtaining another PID from another interface. Thus, time taken for that fingerprint takes effect can be reduced. A subsequent fingerprint unlocking process can be performed.

It should be noted that, the device for fingerprint recognition illustrated in the device implementations of the present disclosure is presented in form of functional units. Term "unit" used herein should be understood as a meaning which is as broad as possible. An object for realizing an illustrated function of each "unit" may be, for example, an application specific integrated circuit (ASIC), a single circuit, a processor (shared, dedicated, or chip set) configured to execute one or more software or firmware programs and a memory, a combined logical circuit, and/or other suitable components for realizing the above functions.

For example, the FingerprintService 501 configured to detect whether the lag appears during calling the binder via the fingerprintd 502 can be realized by a mobile terminal illustrated in FIG. 6. For example, a processor 300 invokes executable program codes stored in a memory 4000 to detect whether the lag appears during calling the binder via the fingerprintd 502.

In consistence with the above, FIG. 6 is a schematic structural diagram illustrating a mobile terminal according to an implementation of the present disclosure. The mobile terminal illustrated in the implementation of the present disclosure may include at least one input device 1000, at least one output device 2000, the at least one processor 3000 such as a central processing unit (CPU), and the memory 4000. The input device 1000, the output device 2000, the processor 3000, and the memory 4000 are coupled together via a bus 5000.

The input device 1000 may be a touch panel, a physical key, a mouse, or the like.

The output device 2000 may be a display screen.

A fingerprint application (FingerprintService) and a fingerprint communication process (fingerprintd) can be invoked by a processor or a controller of the mobile terminal. The processor or controller may be a CPU, a general processor, a digital signal processor (DSP), an application-specific integrated circuit (ASIC), a field programmable gate array (FPGA) device or other programmable logic device, a transistor logic device, a hardware device, or any combination thereof. The processor or controller can realize or execute various exemplary logic blocks, modules, and circuits illustrated in combination with contents of the present disclosure. The processor may be a combination for realizing computing functions, for example, may be a microprocessor or a combination of multiple microprocessors, a combination of a DSP and a microprocessor, or the like.

The memory 4000 may be a high-speed random access memory (RAM), or may be a non-volatile memory such as a disk memory. The memory 4000 is configured to store a set of program codes. The input device 1000, the output device 2000, and the processor 300 are configured to invoke the program codes stored in the memory 4000 to carry out the following operations.

The FingerprintService is configured to detect whether a lag appears during calling a process (binder) via the fingerprintd, and restart, in response to that the lag appears during calling the binder via the fingerprintd, the fingerprintd with a first PID, where the first PID is stored in a local memory in advance. The fingerprintd is configured to obtain a second PID and transmit the second PID to the FingerprintService, where the second PID is obtained during restarting the fingerprintd with the first PID.

The FingerprintService configured to detect whether the lag appears during calling the binder via the fingerprintd is configured to detect whether the fingerprintd succeeds in calling the binder within a preset period, and determine, in response to that the fingerprintd fails to call the binder within the preset period, that the lag appears during calling the binder via the fingerprintd.

For example, the preset period is set by a user or system default.

For example, the preset period is duration of code execution for calling the binder via the fingerprintd.

For example, the FingerprintService configured to restart the fingerprintd with the first PID stored in the local memory in advance is configured to end the fingerprintd with a kill command, and restart the fingerprintd with the first PID via the FingerprintService.

The FingerprintService is further configured to read, in response to that there is no lag during calling the binder via the fingerprintd, the first PID from the local memory.

The FingerprintService is further configured to update the first PID with the second PID after the fingerprintd obtains the second PID and transmits the second PID to the FingerprintService.

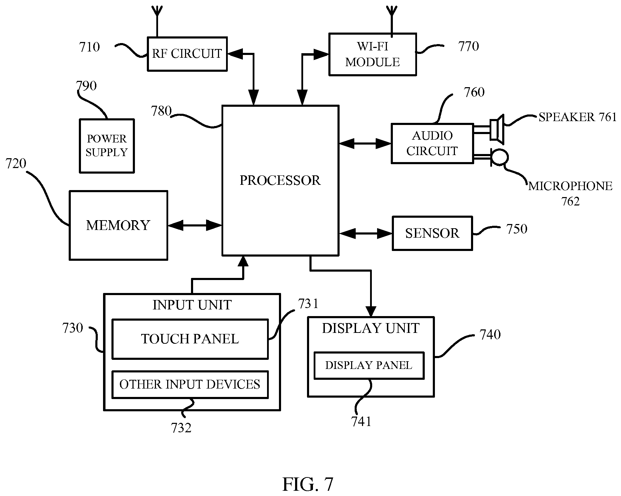

FIG. 7 is a block diagram illustrating a partial structure of a mobile phone related to a mobile terminal according to an implementation of the present disclosure. As illustrated in FIG. 7, the mobile phone includes a radio frequency (RF) circuit 710, a memory 720, an input unit 730, a display unit 740, a sensor 750, an audio circuit 760, a wireless fidelity (Wi-Fi) module 770, a processor 780, a power supply 790, and other components. A person of ordinary art shall understand that the structure of the mobile phone illustrated in FIG. 7 does not constitute any limitation on the mobile phone. The mobile phone in the disclosure may include more or fewer components than illustrated, or may combine certain components, or have different component arrangements.

In the following, various components of the mobile phone will be described in detail with reference to FIG. 7.

The RF circuit 710 is configured to transmit or receive information during transmission and reception of information or during a call. In an example, downlink information of a base station is received and then sent to the processor 780 for processing. In addition, uplink data may be transmitted to the base station. Generally, the RF circuit 710 includes but is not limited to an antenna, at least one amplifier, a transceiver, a coupler, a low noise amplifier (LNA), a duplexer, and the like. In addition, the RF circuit 710 may also communicate with the network and other devices via wireless communication. The wireless communication mentioned above may use any communication standard or protocol, which includes but is not limited to global system of mobile communication (GSM), general packet radio service (GPRS), code division multiple access (CDMA), wideband code division multiple access (WCDMA), long term evolution (LTE), E-mail, short messaging service (SMS), and the like.

The memory 720 is configured to store software programs and modules. The processor 780 is configured to execute various function applications and data processing of the mobile phone by running the software programs and the modules stored in the memory 720. The memory 720 mainly includes a program storage region and a data storage region. The program storage region may store an operating system, application programs (for example, a voice playing function, an image playing function, etc.) required for at least one function, and the like. The data storage region may store data (for example, audio data, phone book, etc.) created according to use of the mobile phone, and the like. In addition, the memory 720 may include a high-speed random access memory (RAM), and may further include a non-transitory memory such as at least one disk storage device, a flash device, or other transitory solid storage devices.

The input unit 730 is configured to receive input digital or character information and generate key signal input associated with user setting and function control of the mobile phone. In an example, the input unit 730 may include a touch panel 731 and other input devices 732. The touch panel 731, also known as a touch screen, can collect touch operations on or near the touch panel 731 (such as an operation of using a finger, a stylus, or any other suitable object or accessory on or near the touch panel 731) and drive a corresponding connection device according to a preset program. For example, the touch panel 731 may include a touch detection device and a touch controller. The touch detection device is configured to detect a touch orientation of the user and a signal generated by the touch operation, and send the signal to the touch controller. The touch controller is configured to receive touch information from the touch detection device, convert the touch information into coordinates of a touch point and then send the coordinates of the touch point to the processor 780, and receive and execute commands sent by the processor 780. In addition, the touch panel 731 may be implemented in various types such as resistive, capacitive, infrared, and surface acoustic waves. In addition to the touch panel 731, the input unit 730 may also include other input devices 732. In an example, the other input devices 732 may include, but are not limit to, one or more of a physical key, a function key (such as a volume control key, a switch key, and the like), a trackball, a mouse, a joystick, and the like.

The display unit 740 is configured to display information input by the user or information provided for the user or various menus of the mobile phone. The display unit 740 may include a display panel 741.For example, the display panel 741 may be configured in the form of a liquid crystal display (LCD), an organic light-emitting diode (OLED), and the like. Further, the touch panel 731 may cover the display panel 741. When the touch panel 731 detects a touch operation on or near the touch panel 731, the touch operation is transmitted to the processor 780 to determine the type of the touch event, and then the processor 780 provides a corresponding visual output on the display panel 741 according to the type of the touch event. Although the touch panel 731 and the display panel 741 are illustrated as two separate components in FIG. 7 to realize the input and output functions of the mobile phone, in some implementations, the touch panel 731 may be integrated with the display panel 741 to implement the input and output functions of the mobile phone.

The mobile phone may also include at least one sensor 750, such as a light sensor, a motion sensor, and other sensors. In an example, the light sensor may include an ambient light sensor and a proximity sensor. The ambient light sensor is configured to adjust the brightness of the display panel 741 according to ambient lights. The proximity sensor is configured to turn off the display panel 741 and/or backlight when the mobile phone reaches nearby the ear. As a motion sensor, the accelerometer sensor is configured to detect the magnitude of acceleration in all directions (typically three axes) and when the mobile phone is stationary, the accelerometer sensor is configured to detect the magnitude and direction of gravity. The accelerometer sensor can be used for mobile phone-gesture recognition-related applications (such as vertical-horizontal screen switch, related games, magnetometer attitude calibration), or for vibration-recognition related functions (such as a pedometer, percussion), and the like. The mobile phone can also be configured with a gyroscope, a barometer, a hygrometer, a thermometer, an infrared sensor and other sensors, and details are not be repeated herein.

The audio circuit 760, a speaker 761, a microphone 762 may provide an audio interface between the user and the mobile phone. The audio circuit 760 is configured to convert the received audio data into electrical signals and transfer the electrical signals to the speaker 761. The speaker 761 is configured to convert the electrical signals into sound signals for output. On the other hand, the microphone 762 is configured to convert the collected sound signals into electrical signals. The audio circuit 760 is configured to receive and convert the electrical signals into audio data for output. The processor 780 is configured to process the audio data and then transmit the audio data processed via the RF circuit 710 to another mobile phone for example, or, the audio data is output to the memory 720 for further processing.

Wi-Fi relates to a short-distance wireless transmission technology. With the Wi-Fi module 770, the mobile phone may assist the user in E-mail receiving and sending, webpage browsing, access to streaming media, and the like. Wi-Fi provides users with wireless broadband internet access. Although the Wi-Fi module 770 is illustrated in FIG. 7, it should be understood that the Wi-Fi module 770 is not essential to the mobile phone and can be omitted according to actual needs without departing from the essential nature of the present disclosure.

The processor 780 is a control center of the mobile phone. Various interfaces and lines are configured to connect various parts of the whole mobile phone. The mobile phone is monitored via running or executing software programs and/or modules stored in the memory 720, and invoking data stored in the memory 720 to perform various functions of the mobile phone and process data. For example, the processor 780 may include one or more processing units. For example, in the processor 780, an application processor may be integrated with a modem processor. The application processor is mainly configured to manage the operating system, the user interface, the application programs, and the like. The modem processor is mainly configured for wireless communication. It is to be understood that the modem processor may not be integrated into the processor 780.

The mobile phone also includes the power supply 790 (such as a battery) configured to supply power to various components. For example, the power supply 790 is configured to be logically coupled with the processor 780 through a power management system to realize management of charging, discharging, and power consumption via the power management system.

Although not illustrated, the mobile phone may include a camera, a Bluetooth module, and the like, and details are not repeated herein.

In the foregoing implementations, respective method operations may be implemented based on the structure of the mobile terminal. The sensor 770 may include a proximity sensor and a humidity sensor. The touch panel 731 may be used as a fingerprint recognition module.

The implementations of the present disclosure further provides a computer storage medium. The computer storage medium may store programs. The programs are operable to execute part of or all operations of any of the methods for fingerprint recognition illustrated in the method implementations mentioned above.

The implementations of the present disclosure also provide a computer program product. The computer program product includes a non-transitory computer readable storage medium storing computer programs. The computer programs are operable with a computer to perform part of or all operations of any of the methods for fingerprint recognition illustrated in the method embodiments mentioned above.

Although the disclosure is described in conjunction with various implementations herein, a person skilled in the art can understand and achieve other variations of the disclosed implementations in the process of implementing the claimed disclosure by making reference to the drawings, the disclosure, and the appended claims. In the claims, "comprising" does not exclude other compositions or operations, and "a" or "one" does not exclude plurality. A single processor or other units may implement multiple functions exemplified in the claims. Some means are recited in different dependent claims, but this does not represent that these means cannot be combined to generate a good effect.

A person skilled in the art will understand that the implementations of the disclosure may be provided as a method, an apparatus (device), or a computer program product. Accordingly, the disclosure may adopt the form of complete hardware implementations, complete software implementations, or implementations integrating software with hardware. Moreover, the disclosure may adopt the form of the computer program product implemented on one or more computer readable storage medium (including, but not limited to, a disk memory, a compact disc read-only memory (CD-ROM), an optical memory, and the like) containing computer readable program codes. The computer programs are stored/distributed in appropriate medium. The computer programs can be provided with other hardware or as part of the hardware. The computer programs may adopt other distribution forms, for example, the computer programs can be provided via an internet or other wired or wireless telecommunication system.

The disclosure is described with reference to flowcharts and/or block diagrams of the method, the apparatus (device), and the computer program product according to the implementations of the disclosure. It is to be understood that each flow and/or block in the flowcharts and/or the block diagrams and a combination of the flows and/or the blocks in the flowcharts and/or the block diagrams may be implemented by computer program instructions. These computer program instructions may be provided for a general purpose computer, a dedicated computer, an embedded processor or processors of other programmable data processing devices to generate a machine, so that an apparatus for achieving functions designated in one or more flows of the flowcharts and/or one or more blocks of the block diagrams is generated via instructions executed by the computers or the processors of the other programmable data processing devices.

These computer program instructions may also be stored in a computer readable memory capable of guiding the computers or the other programmable data processing devices to operate in a specific mode, so that a manufactured product including an instruction apparatus is generated via the instructions stored in the computer readable memory, and the instruction apparatus achieves the functions designated in one or more flows of the flowcharts and/or one or more blocks of the block diagrams.

These computer program instructions may also be loaded to computers or other programmable data processing devices, so that computer-implemented processing is generated by executing a series of operation on the computers or the other programmable devices, and therefore the instructions executed on the computers or the other programmable devices provide operations of achieving the functions designated in one or more flows of the flowcharts and/or one or more blocks of the block diagrams.

Although the disclosure is described in conjunction with specific features and implementations of the disclosure, it is apparent that various modifications and changes may be made to the disclosure without departing from the spirit and scope of the disclosure. Accordingly, the present description and accompanying drawings are merely exemplary illustrations to the disclosure defined by the appended claims, and the disclosure is intended to cover any and all modifications, changes, combinations or equivalents within the scope of the disclosure. It is apparent that a person skilled in the art may make various modifications and transformations to the disclosure without departing from the spirit and scope of the disclosure. Thus, if these modifications and transformations of the disclosure fall within the scope of the claims of the disclosure and an equivalent technology thereof, the disclosure is also intended to include these modifications and transformations.

## Claims

1. A method for fingerprint recognition, the method being applied to a mobile terminal having an Android operating system, the mobile terminal comprising a fingerprint application (FingerprintService) and a fingerprint communication process (fingerprintd), the method comprising:
detecting, via the FingerprintService, whether a lag appears during calling a process (binder) via the fingerprintd;
restarting, in response to that the lag appears during calling the binder via the fingerprintd, the fingerprintd with a first process identifier (PID) via the FingerprintService, the first PID being stored in a local memory in advance; and
obtaining a second PID and transmitting the second PID to the FingerprintService via the fingerprintd, the second PID being obtained during restarting the fingerprintd with the first PID.

2. The method of claim 1, wherein detecting, via the FingerprintService, whether the lag appears during calling the binder via the fingerprintd comprises:
detecting, via the FingerprintService, whether the fingerprintd succeeds in calling the binder within a preset period; and
determining, in response to that the fingerprintd fails to call the binder within the preset period, that the lag appears during calling the binder via the fingerprintd.

3. The method of claim 2, wherein the preset period is user-defined or system default.

4. The method of claim 2, wherein the preset period is duration of code execution for calling the binder via the fingerprintd.

5. The method of any of claims 1 to 4, wherein restarting, via the FingerprintService, the fingerprintd with the first PID stored in the local memory in advance comprises:
ending the fingerprintd with a kill command via the FingerprintService; and
restarting the fingerprintd with the first PID via the FingerprintService.

6. The method of any of claims 1 to 5, further comprising:
reading, in response to that there is no lag during calling the binder via the fingerprintd, the first PID from the local memory via the FingerprintService.

7. The method of any of claims 1 to 6, further comprising the following after obtaining the second PID and transmitting the second PID to the FingerprintService via the fingerprintd:
updating the first PID with the second PID via the FingerprintService.

8. A device for fingerprint recognition, the device being applied to a mobile terminal having an Android operating system, the mobile terminal comprising a fingerprint application (FingerprintService) and a fingerprint communication process (fingerprintd);
the FingerprintService, being configured to detect whether a lag appears during calling a process (binder) via the fingerprintd, and restart, in response to that the lag appears during calling the binder via the fingerprintd, the fingerprintd with a first process identifier (PID), the first PID being stored in a local memory in advance; and
the fingerprintd, being configured to obtain a second PID and transmit the second PID to the FingerprintService, the second PID being obtained during restarting the fingerprintd with the first PID.

9. The device of claim 8, wherein the FingerprintService configured to detect whether the lag appears during calling the binder via the fingerprintd is configured to:
detect whether the fingerprintd succeeds in calling the binder within a preset period; and
determine, in response to that the fingerprintd fails to call the binder within the preset period, that the lag appears during calling the binder via the fingerprintd.

10. The device of claim 9, wherein the preset period is user-defined or system default.

11. The device of claim 9, wherein the preset period is duration of code execution for calling the binder via the fingerprintd.

12. The device of any of claims 8 to 11, wherein the FingerprintService configured to restart the fingerprintd with the first PID stored in the local memory in advance is configured to:
end the fingerprintd with a kill command; and
restart the fingerprintd with the first PID.

13. The device of any of claims 8 to 12, wherein the FingerprintService is further configured to read, in response to that there is no lag during calling the binder via the fingerprintd, the first PID from the local memory.

14. The device of any of claims 8 to 13, wherein the FingerprintService is further configured to update the first PID with the second PID after the fingerprintd obtains the second PID and transmits the second PID to the FingerprintService.

15. A mobile terminal, comprising:
a processor; and
a memory;
the processor being configured to invoke codes or instructions in the memory to perform the method of any of claims 1 to 7.

16. A computer storage medium configured to store at least one computer program, the at least one computer program being operable with a computer to execute the method of any of claims 1 to 7.

17. A computer program product, the computer program product comprising a non-volatile computer readable storage medium that stores at least one computer program, the at least one computer being operable with a computer to execute the method of any of claims 1 to 7.
